# EUROPÄISCHE PATENTSCHRIFT

(11) **EP 2 168 893 B1**
(45) Veröffentlichungstag und Bekanntmachung des Hinweises auf die Patenterteilung: **30.10.2013**
(21) Anmeldenummer: 09011841.5
(22) Anmeldetag: 17.09.2009
(51) Int. Cl.: B65G 53/46

(54) **Zellenradschleuse mit Zerkleinerungseinsatz**
Cellular rotary valve with grinding device
Vanne à roue cellulaire avec élément de broyage

(30) Priorität: 29.09.2008 DE 102008049356
(43) Veröffentlichungstag der Anmeldung: 31.03.2010
(73) Patentinhaber: Zeppelin Silos & Systems GmbH, 88045 Friedrichshafen (DE)
(72) Erfinder: Müller, Robert, 88718 Daisendorf (DE); Bucher, Klaus, 88284 Wolpertswende (DE); Vogelsang, Franz-Josef, 88214 Ravensburg (DE)
(74) Vertreter: Riebling, Peter

(56) Entgegenhaltungen:
- EP-A2- 0 539 871
- DE-A1- 2 107 948
- DE-C1- 4 228 014
- GB-A- 843 877

## Beschreibung

Gegenstand der Erfindung ist eine Zellenradschleuse zur Förderung von Schüttgütern aller Art mit einem Zerkleinerungseinsatz nach dem Oberbegriff des Patentanspruchs 1.

Bei Zellenradschleusen besteht das Problem, dass teilweise großvolumige Agglomerate am Einlaufstutzen eingefüllt werden und auf Grund ihres Volumens nicht in die Zellenradkammer eingebracht werden können. Hier sieht der Stand der Technik Zellenradschleusen mit sogenannten Hackeinsätzen vor, die in der Regel im Einlaufstutzen an der Einlaufseite im Zellenradgehäuse eingebaut sind.

Die dort eingefüllten Agglomerate werden durch die Zellenradbewegung in das im Einlaufstutzen angeordnete und dort vorstehende Schneidmesser oder in dort angeordnete Schneideinsätze gepresst und dort zerkleinert.

Nachteil der bekannten Zerkleinerungstechnik ist jedoch, dass mit zunehmender Betriebsdauer insbesondere bei der Verwendung von lösbaren Schneideinsätzen sich deren Befestigung lockert und nachgestellt werden muss. Im Extremfall kann es vorkommen, dass sich die Befestigung während des Betriebes löst und das Schneidmesser in die Zellenradkammer fällt, wodurch ein Totalschaden an der Zellenradschleuse entsteht.

Bei anderen bekannten Schneideinsätzen besteht der Nachteil, dass sich die Schneidkanten verschleißen und abtragen, wodurch einerseits in unerwünschter Weise Metallpartikel in das Fördergut eingetragen werden und andererseits diese Schneideinsätze von Zeit zu Zeit ausgetauscht werden müssen.

Mit dem Gegenstand der DE 2 107 948 A1 ist eine Zellenradschleuse für rieselfähiges Gut mit einem, einer obere Einlauföffnung bildenden Größe und einem Zellenrad bekannt geworden, dessen radial nach außen liegenden Flügelkanten dicht an der Einlassöffnung bildenden Gehäusekante vorbei streichen und wobei im Bereich der Einlauföffnung Profilflächen angeordnet sind. Im Mittelpunkt dieser Druckschrift steht die Erkenntnis, dass es unerwünscht ist, wenn Granulatkörner zwischen den Flügelkanten und dem Gehäuse zermalmt werden und hierbei in unerwünschter Weise plastifiziert werden. Aus diesem Grund sind die Profilflächen im Einlaufbereich dieser Zellenradschleuse so ausgebildet, dass die zwischen die Kanten geratenden Partikel seitlich weggeschoben werden und wieder zurück in den Einlaufbereich gefordert werden. Bei der sich daraus ergebenden dreiecksförmigen Gestaltung der Einlassöffnung findet im Bereich der schräg verlaufenden Öffnungskanten keine Zerstörung von Gutpartikeln mehr statt.

Die genannte Druckschrift vermeidet deshalb die Zerkleinerung von Granulatkörnern.

Im Gegensatz hierzu hat sich die Erfindung die Aufgabe gestellt, eine Zellenradschleuse zur Förderung von Schuttgütern aller Art so weiter zu bilden, dass auch großvolumige Agglomerate zuverlässig mit geringem Verschleiß zerkleinert werden können. Es sollen auch keine statischen Messer eingesetzt werden, die Verschleiß ausgesetzt sind und Schneidkanten aufweisen. Demnach soll bei einer längeren Betriebsdauer eine betriebssicherere Arbeitsweise gewährleistet sein.

Zur Lösung der gestellten Aufgabe ist die Erfindung durch die technische Lehre des Anspruches 1 gekennzeichnet.

Wesentliches Merkmal der Erfindung ist, dass im Einlaufbereich der Zellenradschleuse ein Zerkleinerungseinsatz angeordnet ist, der mit in Laufrichtung des Zellenrades als Abscherwandung ausgebildet ist, welche mindestens zwei im Winkel zueinander angeordnete Abscherflächen ausbildet, die sich konisch zur Einlaufrichtung des Einfüllgutes in Richtung der Einfüllrichtung nach oben erweitern und sich etwa mittig im Bereich einer Kontur treffen oder ineinander übergehen, wobei sich die Längserstreckung der Kontur konisch erweiternd in Einfüllrichtung erstreckt.

Die Kontur kann erfindungsgemäß als gerade oder gekrümmte Kante, Insbesondere Zuführkante ausgebildet sein. Die Kontur kann aber auch wenig definiert als abgerundeter Übergang zwischen zwei Abscherflächen ausgebildet sein. Die Abscherflächen können erfindungsgemäß eben flächen, gekrümmte Flächen oder 3-dimensonal geformte Flächen, beispielsweise gewellte Flächen sein.

Wesentliches Merkmal der vorliegenden Erfindung ist dem gemäß, dass auf Schneideinsätze und dem Verschleiß ausgesetzten Schneidkanten verzichtet wird und dass eine feststehende, unmittelbar einen integralen Bestandteil des Einfüllstutzens ausbildende Abscherwandung in den Zerkleinerungseinsatz am Einlauf der Zellenradschleuse integriert ist. Damit besteht der Vorteil, dass keine lösbaren und dem Verschleiß ausgesetzten Schneideinsätze mehr vorhanden sind und dass demzufolge auch entsprechende (betriebsanfällige) Befestigungen fehlen.

Hierbei kann es vorgesehen sein, dass die Abscherwandung innen auf die Einlaufflächen des Zerkleinerungseinsatzes aufgedoppelt ist und diese Aufdoppelung aus einem besonders verschleißfesten Material besteht..

In der Regel ist dies jedoch nicht notwendig, sodass die Abscherwandung Teil der Gehäusewandung des Zerkleinerungseinsatzes ist.

Die erfindungsgemäße Abscherwandung mit den dort angeordneten Abscherflächen ist also integraler Gehäusebestandteil des auswechselbaren Zerkleinerungseinsatzes.

Abweichend von gleich wirkenden Vorrichtungen nach dem Stand der Technik unterscheidet sich die Hackschleuse nach der Erfindung im Wesentlichen durch den Einsatz eines etwa zylindrischen Hackstutzens. Der Hackstutzen wird bündig in den Gehäuseeinlauf eingesetzt. Die Innenkontur wird an das Zellenrad angepasst. Der Hackstutzen ist auswechselbar. Bedingt durch die Konstruktion ist ein Nachjustieren oder Austauschen von statischen Messern nicht erforderlich. Schäden an der Zellenradschleuse, bedingt durch ein Lösen der Schrauben an der Scheideeinrichtung, sind somit ausgeschlossen. Im Innern der Zellenradschleuse befinden sich keine lösbaren Teile mehr. Durch die solide Ausführung des Hackstutzens ist eine extrem lange Laufzeit möglich, was mit statischen Messern nicht gewährleistet werden kann. Der Hackstutzen verfügt über eine spezielle geometrische Form, die einen idealen Schneidvorgang ermöglicht. Das Schneiden (oder Zerquetschen oder Brechen) der Agglomerate ist in beiden Drehrichtungen möglich. Alle belasteten Bauteile wurden mittels FEM-Berechnung hinsichtlich des maximal zulässigen Drehmoments überprüft. Ferner wurden die Antriebseinheit und das Zellenrad entsprechend verstärkt.

Die Erfindung ist nicht darauf beschränkt, dass die Abscherwandung in dem Zerkleinerungseinsatz nur aus lediglich zwei konisch zueinander im Winkel stehenden Abscherflächen besteht, die sich mittig in einer etwa konisch zur Vertikalen abgeschrägten Kontur treffen oder ineinander übergehen.

In einer Weiterbildung der vorliegenden Erfindung ist es vorgesehen, dass anstatt zwei solcher Abscherflächen eine Vielzahl von weiteren Abscherflächen vorhanden sind, die sozusagen prismatisch nebeneinander liegend angeordnet sind und wobei sich jeweils zwei nebeneinander liegende Prismenflächen in einer Kontur treffen oder ineinander übergehen, so dass es mehrere Konturen bei mehreren miteinander sich vereinigenden Abscherflächen gibt.

Wichtig bei der vorliegenden Erfindung ist dem gemäß, dass die Längserstreckung der Kontur konisch in den Einlaufbereich des Zellenrades hineinragt und sich konisch nach oben hin erweitert, so dass diese winklige Kontur wie ein Einlauftrichter wirkt.

Weiterhin ist wesentlich, dass sich die genannte Abscherwandung im Bereich einer Bodenfläche des Zerkleinerungseinsatzes befindet, wobei diese Bodenfläche den Einlaufquerschnitt des Einfülltrichters der Zellenradschleuse vermindert. Damit besteht der Vorteil, dass im Bereich dieser Bodenfläche die Schneidkanten für die Abscherwandung angeordnet werden können und hierdurch eine verbesserte Abdichtfläche gegen Leckage-Verluste gewährleistet ist.

Die Abscherkanten oder Abscherkonturen der Abscherwandung sind sozusagen in den Einlaufbereich der Zellenradschleuse hineingezogen, um so eine Bodenfläche vergrößerter Fläche zu bilden, die eine Dichtfläche zum Schutz gegen Leckage-Verluste beim Vorbeilaufen des Zellenradsteges bildet. Der Begriff Abscherkante ist nicht beschränkend als scharfe Kante aufzufassen sondern schließt erfindungsgemäß gerade oder gekrümmt verlaufende Konturen sowie Verbindungskonturen von ineinander übergehenden Flächen ein.

Wichtig ist bei der vorliegenden Erfindung ist dem gemäß, dass die großvolumigen Agglomerate, die aufgrund ihrer Größe aus der Zellenradkammer herausstehen, von dem vorbeilaufenden Zellenradsteg gegen die winklig zueinander angeordneten Abscherflächen gedrückt werden und dort insbesondere auf die Kontur zentriert werden, welche die beiden Abscherflächen miteinander verbindet.

Nach dem diese Kontur einen Winkel in Einlaufrichtung (konisch sich nach oben erweiternd) bildet, wird das zu zerkleinernde Agglomerat von den beiden Abscherflächen in Richtung auf die mittige Kontur gelenkt, dort an der Wandung zerdrückt und die Reste werden nach oben in Gegenrichtung zur Einfüllrichtung abgelenkt und fallen in die danach folgende Zellenradkammer hinein.

Es findet also im Prinzip eine Brecherwirkung statt, und keine Schneidwirkung, wie sie beim Stand der Technik bekannt war.

Durch diese auf die zu zerkleinernden Agglomerate wirkende Brecherwirkung sind deshalb großflächige Flächenanteile im Bereich der Abscherwandung im Einsatz, was mit dem Vorteil verbunden ist, dass dort nur wenig Verschleiß entsteht, der Abrieb von metallischen Spänen in der Regel nicht stattfinden kann und außerdem lösbare Teile in diesem Bereich nicht mehr vorhanden sind.

Je nach Größe des Agglomerates kann sich dieser Vorgang auch mehrfach wiederholen und zwar so lange, bis dass das Agglomerat so klein gebrochen ist, dass es von der nachfolgenden Zellenradkammer aufgenommen werden kann.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Seitenansicht einer Zellenradschleuse nach der Erfindung mit einem Zerkleinerungseinsatz.
- Figur 2:: Die Draufsicht auf die Zellenradschleuse nach Figur 1.
- Figur 3:: Die perspektivische Darstellung des Zerkleinerungseinsatzes in umgedrehter Darstellung.
- Figur 4:: Die Seitenansicht des Zerkleinerungseinsatzes von der einen Seite.
- Figur 5:: Schnitt durch den Zerkleinerungseinsatz gem. der Linie A-A in Figur 6.
- Figur 6:: Draufsicht auf den Zerkleinerungseinsatz in Einlaufrichtung.

- Figur 7:: Die 180° gedrehte Seitenansicht auf den Zerkleinerungseinsatz im Vergleich zu Figur 4.
- Figur 8:: Schnitt gem. der Linie B-B in Figur 6.
- Figur 9:: Die isometrische Ansicht des Zerkleinerungseinsatzes in Lage richtiger Darstellung.
- Figur 10:: Schematisiert gezeichnete Innenansicht auf die Abscherwandung mit Darstellung der Brecherwirkung auf ein Agglomerat.
- Figur 11:: Die Draufsicht auf die Anordnung nach Figur 10.

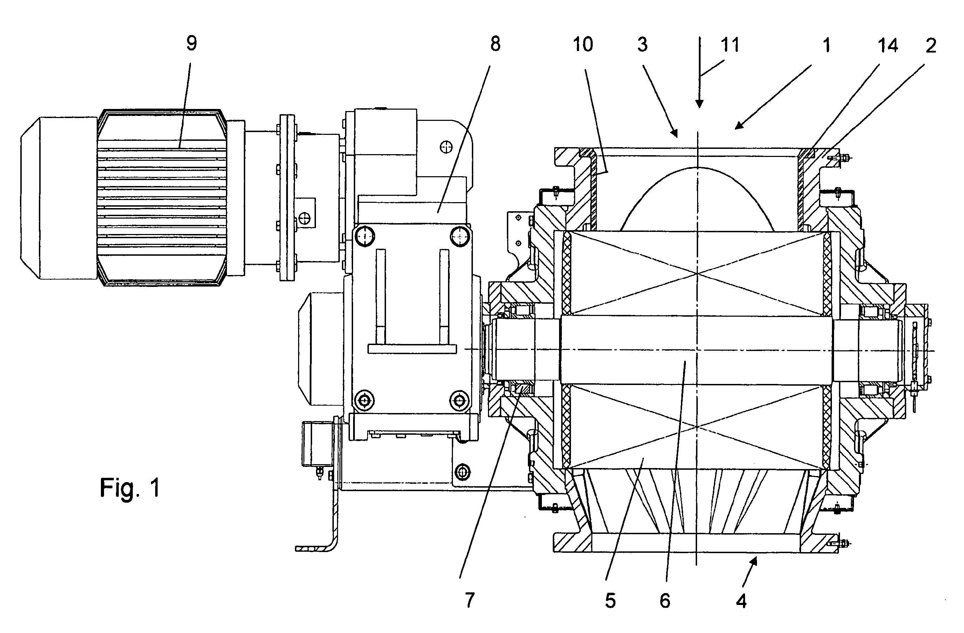

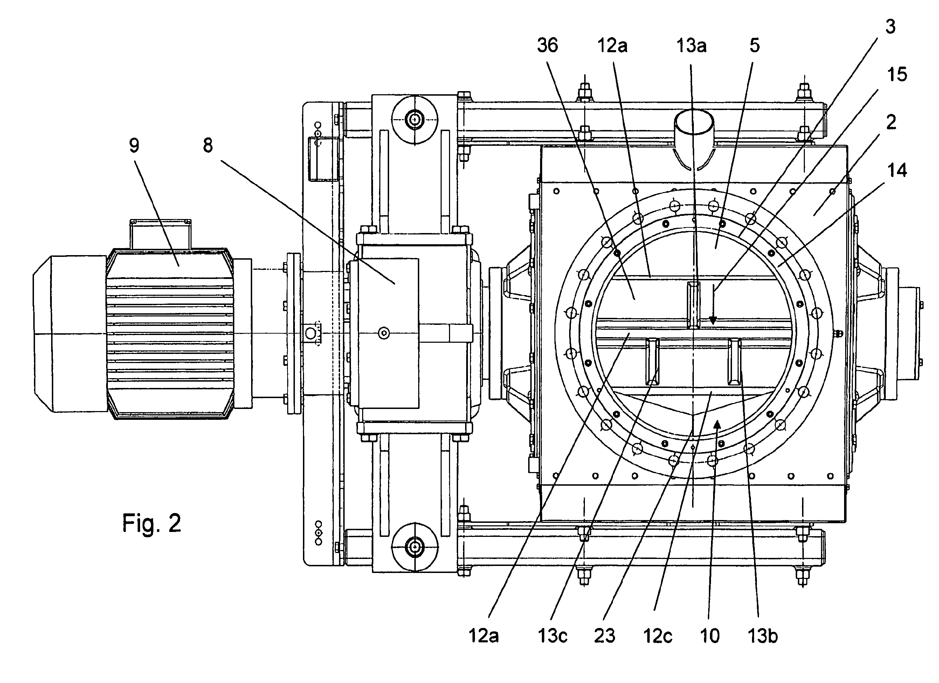

In den Figuren 1 und 2 ist allgemein eine Zellenradschleuse 1 bekannter Bauweise dargestellt, die im wesentlichen aus einem metallischen Gehäuse 2 besteht, an deren Oberseite ein Einlauf 3 für das Einfüllen des Schüttgutes in Pfeilrichtung 11 vorgesehen ist und an deren Unterseite ein Auslauf 4 für das geförderte Schüttgut vorhanden ist.

Im Gehäuse 2 ist eine drehende Zellenradwelle 6 von Wälzlagern 7 aufgenommen, wobei die Zellenradwelle 6 drehfest mit einem Zellenrad 5 verbunden ist.

Das Zellenrad 5 bildet eine Vielzahl von gleichmäßigem Umfang verteilt angeordneten Zellenradkammern aus, wobei jede Zellenradkammer durch einen Zellenradsteg 12, 12a, 12b, 12c von der benachbarten Zellenradkammer abgeteilt ist.

Der Drehantrieb für die Zellenradwelle 6 erfolgt über ein Flachgetriebe 8, welches von einem Antriebsmotor 9 angetrieben ist.

Das Drehmoment des Antriebsmotors 9 muss so groß gewählt werden, dass ein hohes Drehmoment auf das Zellenrad 5 ausgeübt werden kann, um die vorher genannte Brecherwirkung auf die in Einlaufrichtung (Pfeilrichtung 11) in einen Zerkleinerungseinsatz 10 in Fallrichtung 11 einlaufenden Schüttgut-Agglomerate 29 auszuüben. In Figur 2 sind die Zellenradstege 12a, 12b, 12c jeweils durch Versteifungsrippen 13 gegeneinander abgestützt.

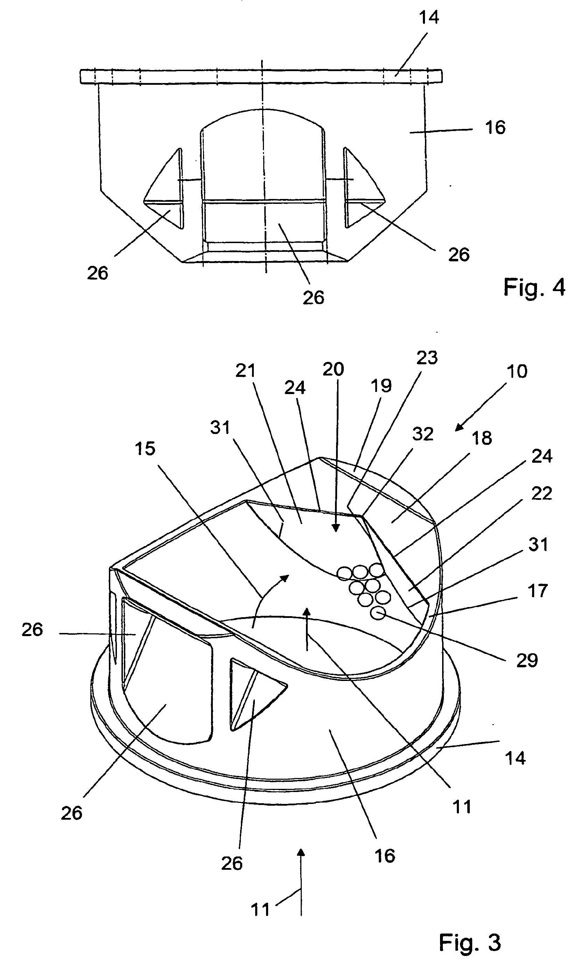

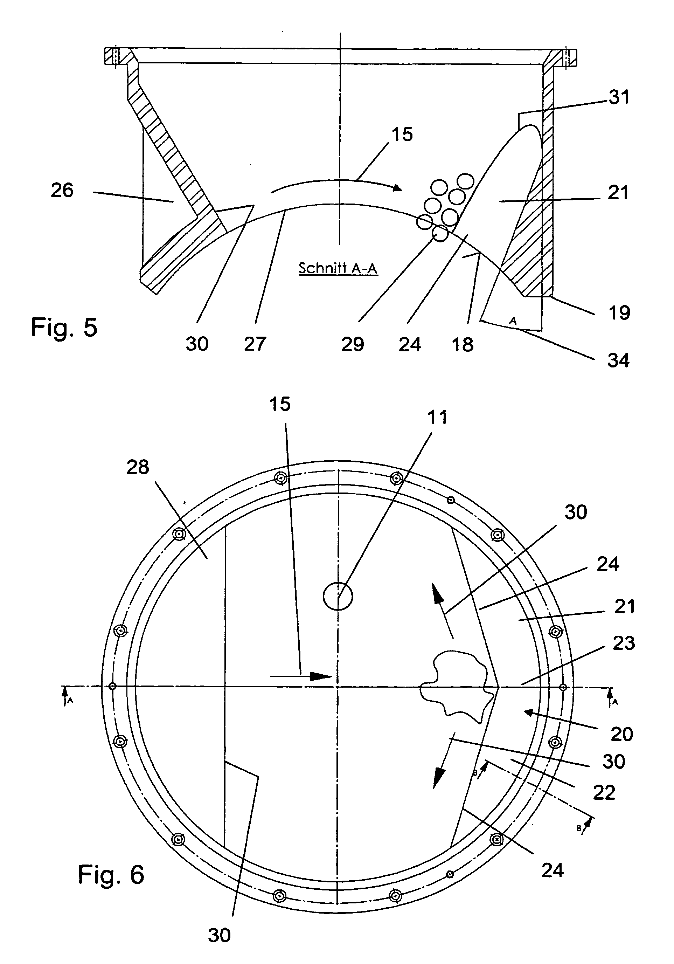

Gem. den Figuren 3 bis 9 besteht der Zerkleinerungseinsatz 10 aus einem etwa zylinderförmigen Körper, der einen oberen Flanschring 14 ausbildet. Der Zerkleinerungseinsatz 10 ist deshalb mit dem Flanschring 14 und zugeordneten Schrauben auf den Einlassbereich der Zellenradschleuse 1 aufgeschraubt. Er ist dem gemäß auswechselbar.

Gemäß den Figuren 3 bis 9 weist der Zerkleinerungseinsatz 10 eine umlaufende, geschlossene Zylinderwand 16 auf, die bodenseitig eine Umlaufkante 17 ausbildet. An dieser Umlaufkante 17 streicht der jeweilige Zellenradsteg 12 in Drehrichtung 15 vorbei.

Wichtig ist nun, dass erfindungsgemäß in dem Zerkleinerungseinsatz 10 eine Abscherwandung 20 vorhanden ist, die aus zwei winklig zueinander angeordneten Abscherflächen 21, 22 besteht. Jede Abscherfläche 21, 22 ist bevorzugt sphärisch gekrümmt. Hierauf ist die Erfindung jedoch nicht beschränkt. Es kann auch vorgesehen sein, dass die jeweilige Abscherfläche 21, 22 genau flächig gerade ausgebildet ist, wobei sich die beiden Abscherflächen 21, 22 mittig in einer Kontur, die nachfolgend als Zuführkante 23 bezeichnet wird, vereinigen.

Um diese Abscherflächen 21, 22 im Konuswinkel geneigt zur Einfüllrichtung (Pfeilrichtung 11) anzuordnen, sind diese im Bereich von Bodenflächen 18, 19 bodenseitig an dem Zerkleinerungseinsatz 10 angeordnet.

Es ist deshalb eine größere Bodenfläche 18 vorhanden, die die lichte Weite des Einlaufbereiches verkleinert und in deren Bereich als Unterkante die Abscherkanten 24, 25 als untere Begrenzung der jeweiligen Abscherflächen 21, 22 angeordnet ist.

Es ist noch eine kleinere Bodenfläche 19 vorhanden, die winklig zu der größeren Bodenfläche 18 ausgebildet ist. Dadurch, dass die Abscherkanten 24, 25 im Bereich einer größeren Bodenfläche 18 angeordnet sind, welche Bodenfläche auf dem Zellenrad-Durchmesser 27 liegt, ergibt sich dort eine großflächige Abdichtfläche die gegen Leckage-Luftverluste hilft. Hierdurch werden Leckage-Verluste minimiert.

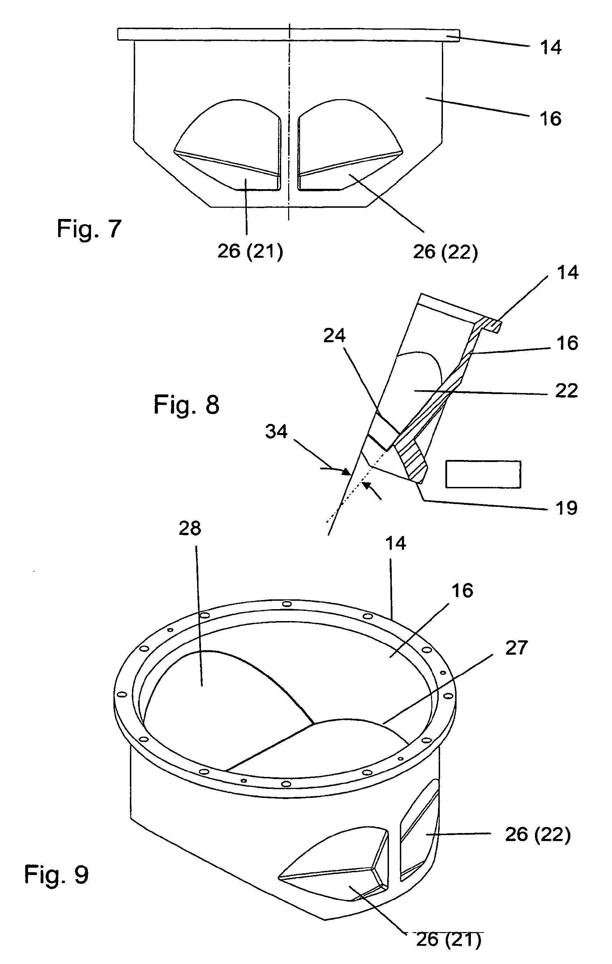

Nach dem der Zerkleinerungseinsatz 10 bevorzugt aus einem gusseisernen Material besteht, wird es bevorzugt, dass aus Gewichtsersparnisgründen eine Vielzahl von Aussparungen 26 in dem Zylinderkörper angeordnet sind, wie dies insbesondere in den Figuren 4 und 7 dargestellt ist.

Diese Aussparungen 26 bilden keinerlei Funktionsbeeinträchtigung, denn sie durchbrechen nur den Zylindermantel sind aber nach vorne (einlaufseitig) durch entsprechende Gegenflächen abgeschlossen. Insbesondere gilt dies für die der Abscherwandung 20 in Laufrichtung 15 gegenüberliegende Konuswand 28, die auch Teil des Zerkleinerungseinsatzes 10 ist.

Eine solche in Laufrichtung konisch einwärts gerichtete Konuswand 28 hat nämlich den Vorteil, dass wenn das Zellenrad 5 in Gegenrichtung zur Drehrichtung 15 angetrieben wird, auch im Bereich dieser Konuswand 28 eine Brecherwirkung stattfindet.

Wichtig hierbei ist im Übrigen, dass die Längserstreckung der Zuführkante 23 einen Kantenwinkel 34 ausbildet, der etwa 20° in Richtung zur Vertikalen geneigt ist.

Dies bedeutet, dass sich die Zuführkante 23 konisch erweiternd nach außen aus dem Zerkleinerungseinsatz 10 heraus erstreckt.

Gleiches gilt auch für die Abscherflächen 21, 22, die sich ebenfalls konisch erweiternd nach außen in Gegenrichtung zur Pfeilrichtung 11 erstrecken. Damit bilden die Abscherflächen 21, 22 in Verbindung mit der Zuführkante 23 entsprechende trichterförmige Einlaufflächen.

Hier soll noch angefügt werden, dass die Konuswand 28 eine Einlaufkante 30 aufweist, deren Längserstreckung sich ebenfalls konisch nach außen erweitert.

Nachdem die beiden Abscherflächen 21, 22 als Konusflächen an einem umlaufenden Zylindermantel ausgebildet sind, ergibt sich in deren oberen Endbereich eine bogenförmige Flächenkontur 31, wie dies aus Figur 3 zu entnehmen ist.

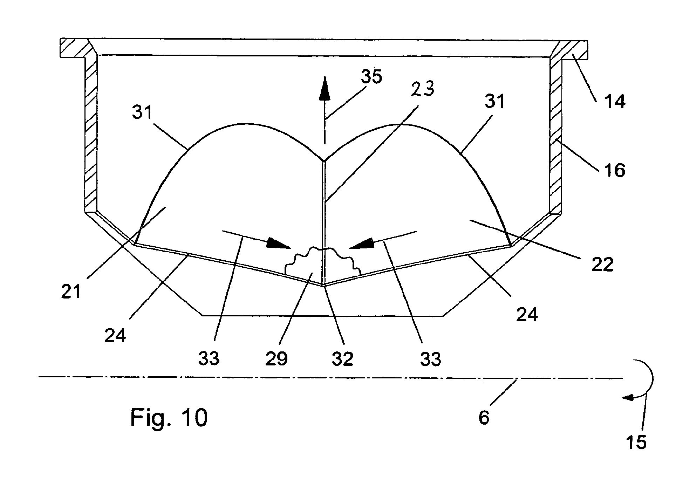

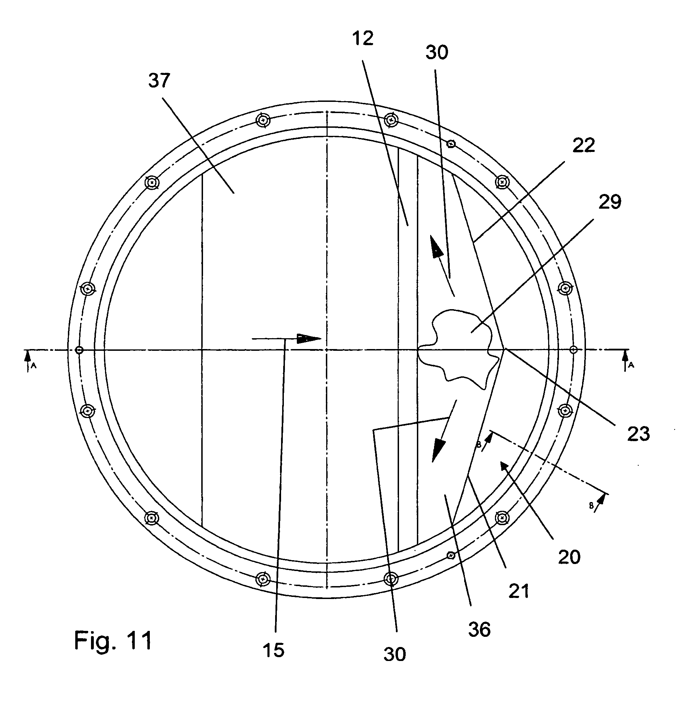

Die Zuführkante 23 läuft bodenseitig in einem Vereinigungspunkt 32 zusammen und die Brecherwirkung auf die zu zerkleinernden Schüttgut-Agglomerate wird nun anhand der Figuren 10 und 11 näher erläutert.

Die Figur 10 ist eine Innenansicht auf die erfindungsgemäße Abscherwandung 20 mit den beiden im Winkel zueinander angeordneten Abscherflächen 21, 22. Es ist nun erkennbar, dass beim Fördern des Schüttgut-Agglomerates 29 in Drehrichtung 15 des Zellenradsteges 12 das Schüttgut-Agglomerat 29 gegen die beiden Abscherflächen 21, 22 in der Papierebene der Figur 10 gepresst wird und dort in den Bereich der winklig ausgeführten Zuführkante 23 auftrifft. Damit wird das Schüttgut-Agglomerat 29 an der Zuführkante 23 gebrochen.

Mit der Pfeilrichtung 33 ist dargestellt, dass alle Schüttgut-Agglomerate 29 in Pfeilrichtung 33 auf diese mittige Zuführkante 23 bedingt durch die Winkelstellung der beiden Abscherflächen 21, 22 zentriert werden und dort zerbrochen werden.

Der obere Teil des abgebrochenen Schüttgut-Agglomerates 29 wird in Pfeilrichtung 35 nach oben hin längs der Zuführkante 23 abgelenkt und fällt dann in die darauffolgende weitere Zellenradkammer, die durch den nachfolgenden Zellenradsteg nach oben begrenzt ist. Der untere Teil des zerkleinerten Schüttgut-Agglomerates 29 wird jedoch in die gleiche Zellenradkammer aufgenommen, wie dies in Figur 11 dargestellt ist. Die Figur 11 zeigt, dass der untere Teil des Schüttgut-Agglomerates 29 in die gleiche Zellenradkammer 36 hineinfällt, während der restliche obere Teil des gebrochenen Agglomerates in die nachfolgende Zellenradkammer 37 hineinfällt. Dies deshalb, weil dieser obere Teil zunächst in Pfeilrichtung 35 nach oben abgelenkt wird und dann über den Zellenradsteg 12 hinüber in die nachfolgende Zellenradkammer 37 hineinfällt.

Aus der oben genannten Beschreibung ergibt sich, dass eine überlegene Brecherwirkung für zu zerkleinerndes Schüttgut-Agglomerat entsteht, ohne dass es des Einsatzes von Schneidkanten, Hackmessern oder widerhakenartigen Vorsprüngen oder dergleichen bedarf. Es handelt sich also mehr um eine Brecherwirkung auf das Schüttgut-Agglomerat als um eine Schneidwirkung.

### Zeichnungslegende

- 1.: Zellenradschleuse
- 2.: Gehäuse
- 3.: Einlauf
- 4.: Auslauf
- 5.: Zellenrad
- 6.: Zellenradwelle
- 7.: Wälzlager
- 8.: Flachgetriebe
- 9.: Antriebsmotor
- 10.: Zerkleinerungseinsatz
- 11.: Pfeilrichtung
- 12.: Zellenradsteg a, b, c
- 13.: Versteifungsrippe
- 14.: Flanschring
- 15.: Drehrichtung
- 16.: Zylinderwand
- 17.: Umlaufkante
- 18.: Bodenfläche (groß)
- 19.: Bodenfläche (klein)
- 20.: Abscherwandung
- 21.: Abscherfläche
- 22.: Abscherfläche
- 23.: Zuführkante
- 24.: Abscherkante
- 25.: Abscherkante
- 26.: Aussparung
- 27.: Zellenrad-Durchmesser
- 28.: Konuswand
- 29.: Schüttgut-Agglomerat
- 30.: Einlaufkante (links)
- 31.: Flächenkontur
- 32.: Vereinigungspunkte
- 33.: Pfeilrichtung
- 34.: Kantenwinkel
- 35.: Pfeilrichtung
- 36.: Zellenradkammer
- 37.: Zellenradkammer

## Patentansprüche

1. Zellenradschleuse zur Förderung von Schüttgütern aller Art mit einem eine obere Einlauföffnung bildenden Gehäuse und einem Zellenrad, dessen radial nach außen liegenden Flügelkanten dicht an der die Einlassöffnung bildenden Gehäusekanten vorbei streichen, wobei im Bereich der Einlauföffnung Profilflächen angeordnet sind, **dadurch gekennzeichnet, dass** die Profilflächen im Bereich der Einlauföffnung als ein Zerkleinerungseinsatz (10) zur Zerkleinerung von großvolumigen Schüttgut-Agglomeraten (29) ausgebildet sind, und aus mindestens einer Abscherwandung (20) gebildet sind, welche zwei in einem Winkel zueinander angeordnete Abscherflächen (21, 22) ausbilden, die sich konisch nach außen in Gegenrichtung zur Einlaufrichtung (11) des Schüttgutes erweitern und sich etwa mittig im Bereich einer Kontur (23) treffen, wobei die Kontur (23) als gerade oder gekrümmte Kante ausgebildet ist.

2. Zellenradschleuse nach Anspruch 1, **dadurch gekennzeichnet, dass** die mindestens eine Abscherwandung (20) als feststehendes Teil einen integralen Bestandteil des Einfüllstutzens bildet und in den Zerkleinerungseinsatz (10) am Einlauf (3) der Zellenradschleuse (1) integriert ist.

3. Zellenradschleuse nach Anspruch 2, **dadurch gekennzeichnet, dass** die Abscherwandung (20) mit den dort angeordneten Abscherflächen (21, 22) integraler Gehäusebestandteil des auswechselbaren Zerkleinerungseinsatzes (10) ist.

4. Zellenradschleuse nach einem der Ansprüche 1 bis 3, **dadurch gekennzeichnet, dass** der Zerkleinerungseinsatz (10) bündig in den Gehäuseeinlauf des Gehäuses (2) eingesetzt ist, die Innenkontur an das Zellenrad (5) angepasst ist und dass der Zerkleinerungseinsatz (10) auswechselbar ist.

5. Zellenradschleuse nach einem der Ansprüche 1 bis 4, **dadurch gekennzeichnet, dass** der Zerkleinerungseinsatz (10) für das Zerquetschen oder Brechen der Agglomerate (29) in beiden Drehrichtungen ausgebildet ist.

6. Zellenradschleuse nach einem der Ansprüche 1 bis 5, **dadurch gekennzeichnet, dass** die Abscherwandung (20) im Bereich einer Bodenfläche (18) des Zerkleinerungseinsatzes (10) angeordnet ist, wobei die Bodenfläche (18) den Einlaufquerschnitt des Einfülltrichters der Zellenradschleuse (1) vermindert.

7. Zellenradschleuse nach einem der Ansprüche 1 bis 6, **dadurch gekennzeichnet, dass** im Bereich der Bodenfläche (18) die Abscherkanten (24, 25) für die Abscherwandung (20) angeordnet sind und hierdurch eine verbesserte Abdichtfläche gegen Leckage-Verluste gewährleistet ist.

8. Zellenradschleuse nach einem der Ansprüche 1 bis 7, **dadurch gekennzeichnet, dass** die Abscherkanten (24, 25) der Abscherwandung (20) in den Einlaufbereich der Zellenradschleuse (1) hineingezogen sind, um so eine Bodenfläche (18) vergrößerter Fläche zu bilden, die ein Dichtfläche zum Schutz gegen Leckage-Verluste beim Vorbeilaufen des Zellenradsteges bildet.

9. Zellenradschleuse nach einem der Ansprüche 1 bis 8, **dadurch gekennzeichnet, dass** der Zerkleinerungseinsatz (10) eine umlaufende, geschlossene Zylinderwand (16) aufweist, die bodenseitig eine Umlaufkante (17) ausbildet, an welcher der jeweilige Zellenradsteg (12) in Drehrichtung (15) vorbei streicht.

10. Zellenradschleuse nach einem der Ansprüche 1 bis 9, **dadurch gekennzeichnet, dass** die Abscherflächen (21, 22) sphärisch gekrümmt sind.

11. Zellenradschleuse nach einem der Ansprüche 1 bis 9, **dadurch gekennzeichnet, dass** die Abscherflächen (21, 22) als gerade Flächen ausgebildet sind.

12. Zellenradschleuse nach einem der Ansprüche 1 bis 11, **dadurch gekennzeichnet, dass** die Abscherflächen (21, 22) im Konuswinkel geneigt zur Einfüllrichtung (Pfeilrichtung 11) angeordnet sind und diese im Bereich von Bodenflächen (18, 19) bodenseitig an dem Zerkleinerungseinsatz (10) angeordnet sind.

13. Zellenradschleuse nach einem der Ansprüche 1 bis 12, **dadurch gekennzeichnet, dass** der Abscherwandung (20) in Laufrichtung (15) des Zellenrades(5) gegenüberliegend eine Konuswand (28) im Zerkleinerungseinsatz (10) angeordnet ist.

14. Zellenradschleuse nach einem der Ansprüche 1 bis 13, **dadurch gekennzeichnet, dass** die Längserstreckung der Kontur (23) einen Winkel (34) ausbildet, der etwa 20° in Richtung zur Vertikalen geneigt ist.

## Claims

1. Cellular rotary valve for conveying all types of bulk materials with a housing forming an upper inlet opening and a cellular wheel, the vane edges of which, lying radially outwardly, brush closely past the housing edges forming the inlet opening, profile faces being arranged in the region of the inlet opening, **characterised in that** the profile faces in the region of the inlet opening are configured as a crushing insert (10) for crushing large-volume bulk material agglomerates (29), and are formed from at least one shearing wall (20), which shearing walls form two shearing faces (21, 22), which are arranged at an angle to one another and widen conically outwardly in the opposite direction to the inlet direction (11) of the bulk material and meet approximately centrally in the region of a contour (23), the contour (23) being configured as a straight or curved edge.

2. Cellular rotary valve according to claim 1, **characterised in that** the at least one shearing wall (20), as a fixed part, forms an integral component of the filling connection piece and is integrated in the crushing insert (10) at the inlet (3) of the cellular rotary valve (1).

3. Cellular rotary valve according to claim 2, **characterised in that** the shearing wall (20) with the shearing faces (21, 22) arranged there is an integral housing component of the exchangeable crushing insert (10).

4. Cellular rotary valve according to any one of claims 1 to 3, **characterised in that** the crushing insert (10) is inserted flush into the housing inlet of the housing (2), the internal contour is adapted to the cellular wheel (5) and **in that** the crushing insert (10) is exchangeable.

5. Cellular rotary valve according to any one of claims 1 to 4, **characterised in that** the crushing insert (10) is configured to crush or break the agglomerates (29) in the two directions of rotation.

6. Cellular rotary valve according to any one of claims 1 to 5, **characterised in that** the shearing wall (20) is arranged in the region of a base face (18) of the crushing insert (10), the base face (18) reducing the inlet cross section of the filling funnel of the cellular rotary valve (1)

7. Cellular rotary valve according to any one of claims 1 to 6, **characterised in that** the shearing edges (24, 25) for the shearing wall (20) are arranged in the region of the base face (18) and an improved sealing face against leakage losses is ensured thereby.

8. Cellular rotary valve according to any one of claims 1 to 7, **characterised in that** the shearing edges (24, 25) of the shearing wall (20) are drawn into the inlet region of the cellular rotary valve (1) in order to thus form a base face (18) with an enlarged area, which forms a sealing face for protection against leakage losses when running past the cellular wheel web.

9. Cellular rotary valve according to any one of claims 1 to 8, **characterised in that** the crushing insert (10) has a peripheral, closed cylinder wall (16), which, on the base side, forms a peripheral edge (17), past which the respective cellular wheel web (12) brushes in the direction (15) of rotation.

10. Cellular rotary valve according to any one of claims 1 to 9, **characterised in that** the shearing faces (21, 22) are spherically curved.

11. Cellular rotary valve according to any one of claims 1 to 9, **characterised in that** the shearing faces (21, 22) are configured as straight faces.

12. Cellular rotary valve according to any one of claims 1 to 11, **characterised in that** the shearing faces (21, 22) are arranged inclined at the cone angle to the filling direction (arrow direction 11) and these are arranged in the region of base faces (18, 19) on the base side of the crushing insert (10).

13. Cellular rotary valve according to any one of claims 1 to 12, **characterised in that** a cone wall (28) is arranged in the crushing insert (10) opposite the shearing wall (20) in the running direction (15) of the cellular wheel (5).

14. Cellular rotary valve according to any one of claims 1 to 13, **characterised in that** the longitudinal extent of the contour (23) forms an angle (34), which is inclined by about 20° in the direction of the vertical.

## Revendications

1. Vanne à roue cellulaire pour l'acheminement de produits en vrac de toutes sortes, avec un carter qui forme une ouverture d'entrée supérieure, et une roue cellulaire dont les bords d'ailettes situés radialement vers l'extérieur passent tout contre les bords de carter formant l'ouverture d'entrée, étant précisé que des surfaces profilées sont disposées dans la zone de l'ouverture d'entrée, **caractérisée en ce que** les surfaces profilées prévues dans la zone de l'ouverture d'entrée sont conçues comme un ensemble de broyage (10) pour broyer des agglomérés en vrac de gros volume (29) et se composent d'au moins une paroi de cisaillement (20) qui forme deux surfaces de cisaillement (21, 22) qui sont disposées suivant un certain angle l'une par rapport à l'autre, qui s'élargissent en cône vers l'extérieur, en sens inverse par rapport à l'ouverture d'entrée (11) des produits en vrac, et qui se rejoignent à peu près au milieu, dans la zone d'un contour (23), le contour (23) étant conçu comme un bord droit ou courbe.

2. Vanne à roue cellulaire selon la revendication 1, **caractérisée en ce que** la ou les parois de cisaillement (20), sous la forme d'une pièce fixe, sont des éléments constitutifs de la tubulure de remplissage et sont intégrées dans l'ensemble de broyage (10) à l'entrée (3) de la vanne à roue cellulaire (1).

3. Vanne à roue cellulaire selon la revendication 2, **caractérisée en ce que** la paroi de cisaillement (20) avec les surfaces de cisaillement (21, 22) prévues sur elles est un élément de l'ensemble broyeur remplaçable (10) constitutif du carter.

4. Vanne à roue cellulaire selon l'une des revendications 1 à 3, **caractérisée en ce que** l'ensemble de broyage (10) est inséré dans l'entrée du carter (2) au ras de ladite entrée, le contour intérieur est adapté à la roue cellulaire (5), et **en ce que** l'ensemble de broyage (10) est remplaçable.

5. Vanne à roue cellulaire selon l'une des revendications 1 à 4, **caractérisée en ce que** l'ensemble de broyage (10) est conçu pour écraser ou concasser les agglomérés (29) dans les deux sens de rotation.

6. Vanne à roue cellulaire selon l'une des revendications 1 à 5, **caractérisée en ce que** la paroi de cisaillement (20) est disposée dans la zone d'une surface de fond (18) de l'ensemble de broyage (10), la surface de fond (18) réduisant la section transversale d'entrée de la trémie de remplissage de la vanne à roue cellulaire (1).

7. Vanne à roue cellulaire selon l'une des revendications 1 à 6, **caractérisée en ce que** c'est dans la zone de la surface de fond (18) que sont disposés les bords de cisaillement (24, 25) pour la paroi de cisaillement (20), ce qui garantit une surface d'étanchéité améliorée contre les pertes par fuite.

8. Vanne à roue cellulaire selon l'une des revendications 1 à 7, **caractérisée en ce que** les bords de cisaillement (24, 25) de la paroi de cisaillement (20) sont enfoncés dans la zone d'entrée de la vanne à roue cellulaire (1), afin de former ainsi une surface de fond (18) de plus grande surface qui forme une surface d'étanchéité pour une protection contre les pertes par fuite lors du passage de l'ailette de la roue cellulaire.

9. Vanne à roue cellulaire selon l'une des revendications 1 à 8, **caractérisée en ce que** l'ensemble de broyage (10) présente une paroi cylindrique circulaire fermée (16) qui forme, côté fond, un bord circulaire (17) contre lequel l'ailette de roue cellulaire (12) passe dans le sens de rotation (15).

10. Vanne à roue cellulaire selon l'une des revendications 1 à 9, **caractérisée en ce que** les surfaces de cisaillement (21, 22) ont une forme courbe sphérique.

11. Vanne à roue cellulaire selon l'une des revendications 1 à 9, **caractérisée en ce que** les surfaces de cisaillement (21, 22) sont conçues comme des surfaces droites.

12. Vanne à roue cellulaire selon l'une des revendications 1 à 11, **caractérisée en ce que** les surfaces de cisaillement (21, 22) sont inclinées suivant un angle de cône, par rapport au sens de remplissage (sens de la flèche 11), et sont disposées sur l'ensemble de broyage (10) dans la zone de surfaces de fond (18, 19), côté fond.

13. Vanne à roue cellulaire selon l'une des revendications 1 à 12, **caractérisée en ce qu'**une paroi conique (28) est disposée dans l'ensemble de broyage (10) à l'opposé de la paroi de cisaillement (20), dans le sens de rotation (15) de la roue cellulaire (5).

14. Vanne à roue cellulaire selon l'une des revendications 1 à 13, **caractérisée en ce que** l'extension longitudinale du contour (23) forme un angle (34) qui est incliné d'environ 20° par rapport à la verticale.
